# EUROPEAN PATENT SPECIFICATION

(11) **EP 1 392 991 B1**
(45) Date of publication and mention of the grant of the patent: **21.03.2007**
(21) Application number: 02742828.3
(22) Date of filing: 13.05.2002
(51) Int. Cl.: F16K 1/48, F16K 39/02

(54) **A SERVO CONTROL VALVE**
SERVOSTEUERVENTIL
CLAPET DE SERVOCOMMANDE

(30) Priority: 16.05.2001 DK 200100781
(43) Date of publication of application: 03.03.2004
(73) Proprietor: HIH Development A/S, 7400 Herning (DK)
(72) Inventor: HALLGREEN, Lars, DK-4700 N stved (DK)
(74) Representative: Knoblauch, Andreas
(86) International application number: PCT/DK2002/000311
(87) International publication number: WO 2002/093048

(56) References cited:
- DE-C1- 19 623 718
- GB-A- 535 019

## Description

The invention relates to a servo control valve for controlling a flow of liquid in a pipeline and comprising a valve housing divided into first and second sections connected to the pipe upstream and downstream respectively of the valve by a flow opening defining an axis, a pressure chamber designed preferably coaxially to the flow opening and communicating with the second section of the valve housing, and a plunger displaceably placed in the pressure chamber and having an end part for controlling the flow area of the valve in cooperation with said flow opening.

Such valves are for instance known from documents DE-A-196 23 718 or 6B-A-535 019.

Valves of this type are also largely used for controlling the rate of the liquid in the pipelines that for example are part of a cooling or heating system.

In the supply pipe to a radiator of a central heating system, a valve is thus normally inserted for controlling the rate of the water flow and thereby the heat emission of the radiator.

Normally, controlling takes place by regulating the flow area of the valve in dependence of a parameter which e.g. can be a desired room temperature. For this purpose, a valve body is positioned in the valve at an adequate distance from its flow opening by means of an actuator which can be a motor in some cases and means operating in dependence of e.g. a temperature or a pressure in other cases.

During operation, a differential pressure is generated above the valve body which thereby is affected by a force increasing with the size of the valve and to which the actuator has to be dimensioned to overcome. Thereby, the price of the valve is increased considerably by the relatively expensive actuator which, as mentioned, increases with the size of the valve.

This problem is tried to be solved by letting the valve body be part of a plunger displaceably placed in a pressure chamber and then designing this plunger with a longitudinal channel discharging into the pressure chamber. Thereby, the differential pressure can be reduced to some extent. However, said channel is inclined to be blocked up by impurities carried along by the liquid flowing through the valve so that the desired pressure equalization eventually will not take place, and the valve therefore no longer is able to function satisfactorily.

The object of the invention is to provide a control valve of the kind mentioned in the opening paragraph, which has a simple, inexpensive structure, continuously is reliable, and which can be controlled easily and safely by means of a very small force application.

The novel and unique features according to the invention, whereby this is achieved, is the fact that the valve comprises an axial opening designed in the plunger and connected to at least one first channel discharging into or near the first section of the valve housing, and at least one second channel discharging into the second section of the valve housing, a positioning rod mounted displaceably or rotatably in the valve housing and having a first end part received in an axially displaceable manner in the axial opening of the plunger and a second end part extending out of the housing, and a connecting channel designed in the positioning rod or the plunger and communicating with the pressure chamber at one end and furthermore communicating with the at least one first channel of the plunger in a first position of the positioning rod in relation to the plunger, with the at least one second channel of the plunger in a second position and with none of these channels in a third position.

Conventionally, the differential pressure above the adjustable flow area of the control valve has the adverse effect of having to be overcome. For this purpose, a relatively great force is required and a correspondingly large and expensive actuator.

In the control valve according to the invention, the differential pressure is not to be overcome. On the contrary, the conventionally harmful differential pressure is now surprisingly utilised for controlling the valve.

This control takes place easily and safely by merely displacing or rotating the positioning rod and for this purpose, only relatively small forces are required which can be produced by correspondingly small, inexpensive actuators which thus do not have to increase with the size of the valve.

The working channels of the valve can readily be designed with sufficiently large cross sections for them not to be blocked up by impurities in the liquid flowing, during operation, through the valve which therefore continuously will have a reliable operation.

Said channels can be designed in different ways depending on how the positioning rod is mounted in the valve housing and if it is arranged for displacement or rotation.

In all cases, the positioning rod must however be designed with a connecting channel discharging partly into the pressure chamber, partly at a distance from this chamber. Thereby, the positioning rod will be able to make the differential pressure displace the plunger up or down and thereby control the flow area of the valve.

Where the positioning rod is displaceable, it is designed with a longitudinal channel in the rod or the plunger.

Where the rod is rotatable, it is designed with a screw thread along the outer side. In this case, the axial spacing between two consecutive 360° threads must be equal to or smaller than the diameter of the second cross channel of the plunger.

The pressure chamber can advantageously have a relatively large diameter which can be larger than the flow area of the valve so that the plunger will react to even small differential pressures.

Where the positioning rod is provided with a collar on either side of the axial opening of the plunger, the valve can advantageously be controlled even if the differential pressure is so low that it is not able to overcome the friction between the movable parts of the valve, it now being the collars that displace the plunger in the pressure chamber when the positioning rod is manipulated.

The invention will be explained in greater detail below, describing only exemplary embodiments and giving further advantageous characteristics and technical effects with reference to the drawing, in which
Fig. 1 shows a first embodiment of a control valve according to the invention in one control phase,
Fig. 2 shows the control valve in fig. 1 in a second control phase,
Fig. 3 shows the control valve in fig. 1 in a third control phase,
Fig. 4 shows a positioning rod which is part of the control valve in figs. 1 - 3,
Fig. 5 shows a plunger which is part of the control valve in figs. 1 - 3,
Fig. 6 shows a second embodiment of a control valve according to the invention in one control phase,
Fig. 7 shows the control valve in fig. 6 in a second control phase,
Fig. 8 shows the control valve in fig. 6 in a third control phase,
Fig. 9 shows a positioning rod which is part of the control valve in figs. 6 - 8,
Fig. 10 shows a plunger which is part of the control valve in figs. 6 - 8,
Fig. 11 shows a third embodiment of a control valve according to the invention,
Fig. 12 shows a fourth embodiment of a control valve according to the invention in one control phase,
Fig. 13 shows the control valve in fig. 12 in a second control phase,
Fig. 14 shows the control valve in fig. 12 in a third control phase,
Fig. 15 shows a positioning rod which is part of the control valve in figs. 12 - 14,
Fig. 16 shows a fifth embodiment of a control valve according to the invention in one control phase,
Fig. 17 shows the control valve in fig. 16 in a second control phase,
Fig. 18 shows the control valve in fig. 16 in a third control phase, and
Fig. 19 shows a plunger which is part of the control valve in figs. 16 - 18.

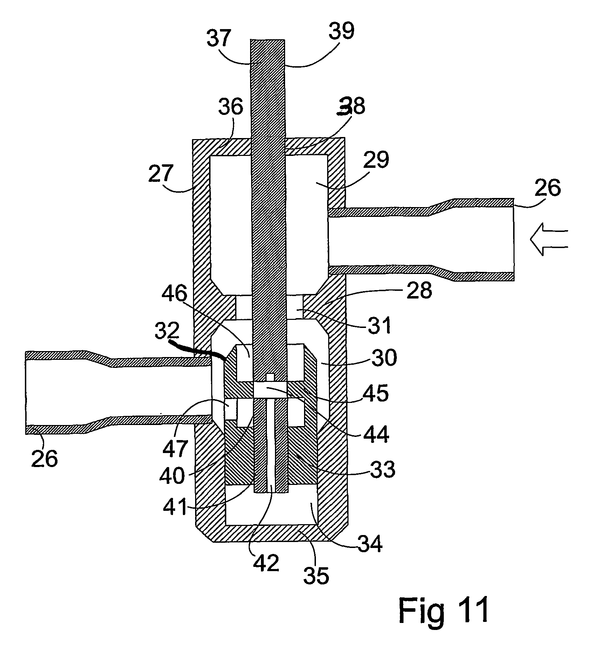

In the following, it is assumed that the control valve is inserted in a supply pipe for a radiator (not shown) which, as seen in the drawing, is connected to the left section of the pipe. As indicated by the arrow (see figure 11), the water is thus flowing from the right to the left through the valve.

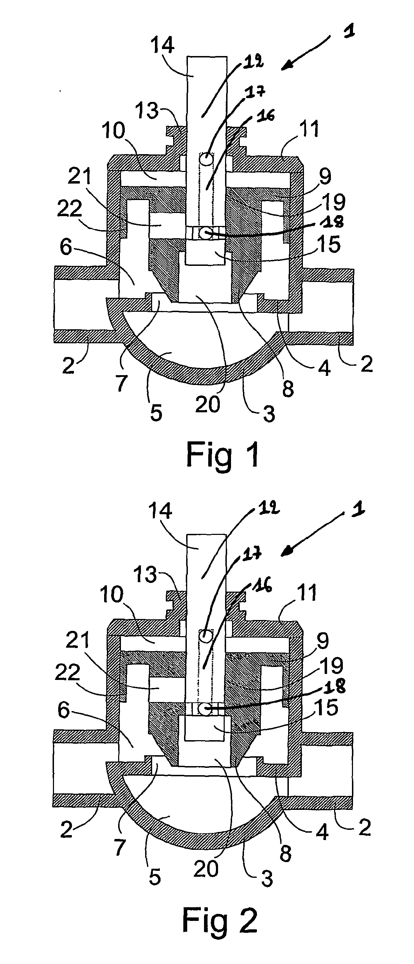

In figs. 1 - 5, the control valve is generally designated by the reference numeral 1 whereas the only fragmentarily shown supply pipe is designated by the reference numeral 2.

The valve has a valve housing 3 which is divided into a first section 5 and a second section 6 by a partition 4. The two sections 5,6 are located upstream and downstream respectively of the valve connected to the pipe 2.

In the partition 4, a flow opening 7 is furthermore located which allows the water in the radiator to pass.

A valve cone (end part) 8 on a displaceable plunger 9 is serving for closing the flow opening 7 or controlling the flow area of the valve by being positioned at an adequate distance from the flow opening in dependence of e.g. the room temperature.

The plunger is displaceably located in a pressure chamber 10 which at the bottom, seen in the drawing, is communicating with the second section 6 of the valve housing 3. At the top, the pressure chamber is closed by a base 11.

A positioning rod 12 displaceably mounted in a location bearing 13 in this base has an upper end part 14 and a lower end part 15. The two end parts 14, 15 are extending out of and into respectively the valve housing 3.

In this case, a longitudinal central channel 16 is designed in the positioning rod 12, said channel discharging into the pressure chamber 10 via an upper cross channel 17 and at a distance from this chamber via a lower cross channel 18.

Alternatively, the longitudinal channel 16 can be designed as a slot or groove along the side of the positioning rod.

In the plunger 9, an axial opening 19 is furthermore designed for receiving the lower end part 15 of the positioning rod so that the lower cross channel 18 of the rod will be in said axial opening.

In the plunger 9, a first channel 20 which at the bottom is connecting the axial opening 19 with the first section 5 of the valve housing, and a second channel 21 which at the top is connecting the axial opening 19 with the second section of the valve housing are furthermore designed.

As can be seen, the plunger 9 has an enlarged area 22 having greater diameter than the flow opening 7.

When the control valve is flown through by water to the radiator, a differential pressure is created between the first and second sections 5 and 6 of the valve housing, said pressure will affect the plunger 9 with an upward first force.

The pressure in the pressure chamber 10 is simultaneously affecting the plunger 9 with a downward second force.

In fig. 1, the positioning rod 12 has been positioned in such a way in the valve housing 3 by means of an actuator (not shown) that the pressure chamber 10 will communicate with the second section 6 of the valve housing via the second channel 21 of the plunger 9 and the longitudinal central channel 16, upper cross channel 17 and lower cross channel 18 of the positioning rod 12, whereas the connection between the pressure chamber 10 and the first section 5 of the valve housing simultaneously has been disconnected.

The pressure in the second section 6 of the valve housing will therefore be transmitted to the pressure chamber. As the pressure in this chamber therefore will be lower than the pressure in the first section 5 of the valve housing, the resultant of the two forces simultaneously affecting the plunger will be an upward force which will try to push the plunger upwards or in other words, the control valve is in its opening phase.

This opening phase will last until the situation in fig. 2 has arisen, in which the positioning rod is disconnecting any connection between on one hand the pressure chamber 10 and on the other both the first and the second of the two sections 5, 6 of the valve housing. In this phase, the pressure in the pressure chamber will regulate itself automatically to the same size as the pressure in the first section of the valve housing, and the resultant of the two forces simultaneously affecting the plunger will therefore be zero. The control valve is in a stationary phase.

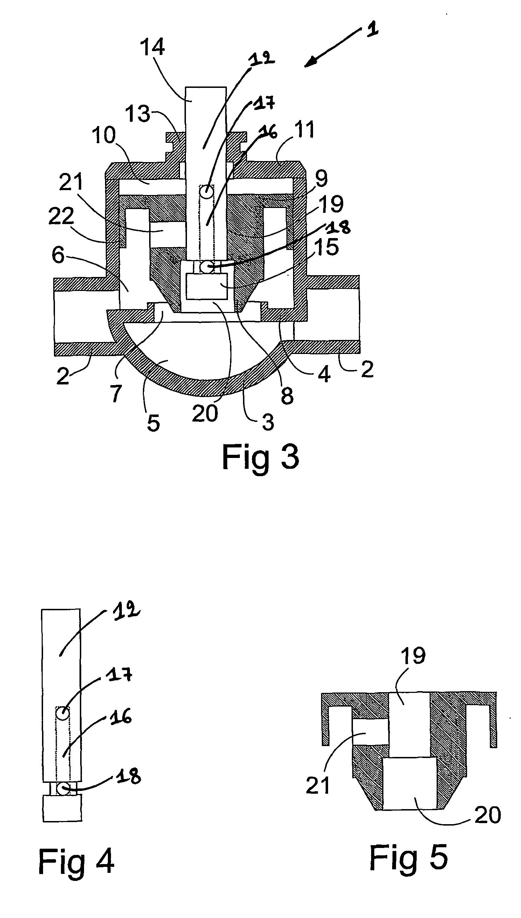

In fig. 3, the positioning rod 12 has now been positioned in such a way in the valve housing 3 that the pressure chamber 10 will communicate with the first section 5 of the valve housing via the first channel 20 of the plunger 9 and the longitudinal central channel 16 and upper and lower cross channels 17 and 18 of the positioning rod 12 whereas the connection between the pressure chamber 10 and the second section 6 of the valve housing simultaneously has been disconnected.

The pressure in the first section 5 of the valve housing will therefore be transmitted to the pressure chamber. As the pressure in this chamber therefore will be the same as the pressure in the first section 5 of the valve housing whereas the pressure on the underside of the upper, enlarged area 22 of the plunger will be the same as the lower pressure in the second section 6 of the valve housing, the resultant of the two forces simultaneously affecting the plunger will be a downward force trying to push the plunger downwards or in other words, the control valve is in a closing phase.

As can be seen, it is the differential pressure between the two sections 5 and 6 of the valve housing, which is thus directly utilised for controlling the valve whereas the positioning rod easily can be displaced by means of even small force applications. Therefore, a small and therefore relatively inexpensive actuator can advantageously be used for positioning the plunger and thereby controlling the valve.

As the upper, enlarged area 22 of the plunger has a relatively large diameter, the plunger can easily react to even small differential pressures between the first and second sections 5 and 6 of the valve housing 3.

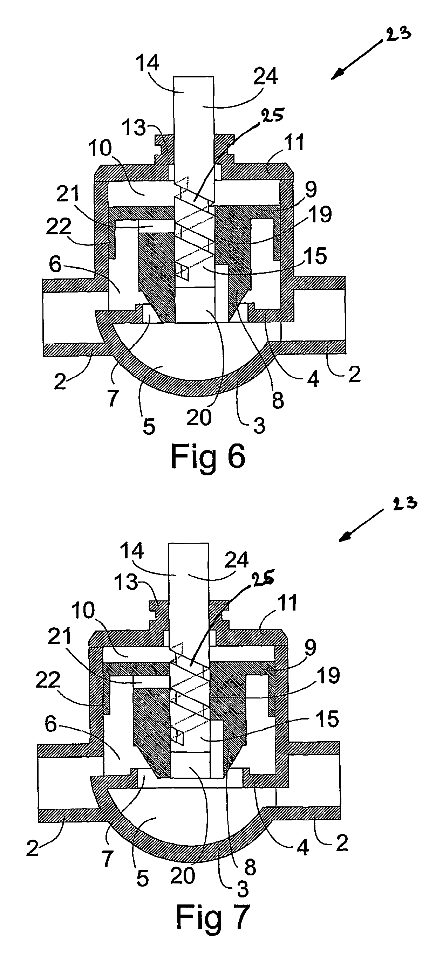

Figs. 6 - 10 show a second embodiment of a valve 23 according to the invention. This embodiment corresponds essentially to the one in figs. 1 - 5, and like parts are therefore designated by the same reference numerals.

The difference is that the connecting channel of the positioning rod 24 now is designed as a screw thread 25 extending from the pressure chamber 10 along the outer side of the rod to an area at the axial opening 19 of the plunger 9, and that the valve is controlled by rotating the positioning rod whereby the result is the same control phases as in figs. 1 - 3.

In fig. 6, the positioning rod 24 has been positioned by means of an actuator (not shown) in such an angle in the valve housing 3 that the pressure chamber 10 will communicate with the second section 6 of the valve housing via the second channel 21 of the plunger 9 and the screw thread 25 of the positioning rod whereas the connection between the pressure chamber 10 and the first section 5 of the valve housing simultaneously has been disconnected. The control valve is, as in fig. 1, in an opening phase.

In fig. 7, the positioning rod has been rotated in such a way that it is shutting off any connection between on one hand the pressure chamber 10 and on the other both the first and the second of the two sections 5 and 6 of the valve housing. The control valve is, as in fig. 2, in a stationary phase.

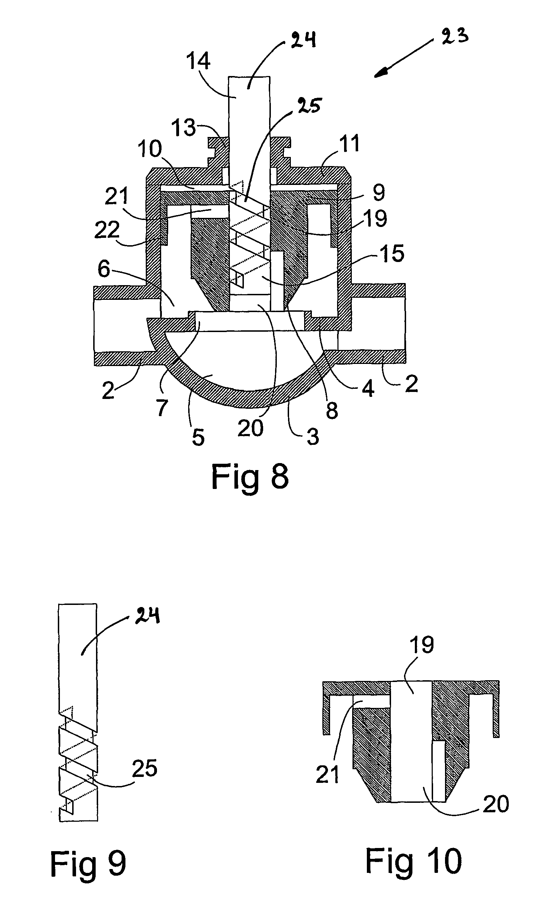

In fig. 8, the positioning rod 12 has been rotated further so that the pressure chamber 10 will communicate with the first section 5 of the valve housing via the first channel 20 of the plunger 9 and the screw thread 25 of the positioning rod whereas the connection between the pressure chamber 10 and the second section 6 of the valve housing simultaneously has been disconnected. The control valve is, as in fig. 3, in a closing phase.

Fig. 11 shows a third embodiment of a valve according to the invention, inserted in the supply pipe 26 only shown fragmentarily.

The valve has a valve housing 27 divided into a first section 29 and a second section 30 by a partition 28, said sections being connected to the pipe 26 upstream and downstream respectively of the valve. A flow opening 31 for the water to a radiator is furthermore located in the partition.

A valve cone (end part) 32 on a displaceable plunger 33 is serving for closing the flow opening or controlling the flow area of the valve by being positioned at an adequate distance from the flow opening in dependence on e.g. the room temperature.

The plunger is displaceably placed in a pressure chamber 34 communicating, without plunger, with the second section 30 of the valve housing. At the bottom, the pressure chamber is closed by a base 35. At the top, the first section of the valve housing is closed by a second base 36. A positioning rod 37 displaceably mounted in a location bearing 38 in the base 36 of the latter has an upper end part 39 extending out of the valve housing and a lower end part 40 extending in through an axial opening 41 in the plunger 33 via the first and second sections 29;30 of the housing.

In the positioning rod 37, a longitudinal central channel 42 is designed, which is discharging into the pressure chamber 34 at one end and discharging into the axial opening 41 of the plunger at the other end via an upper cross channel 44 at a partition 45 in the axial opening.

In the plunger 33, a first channel 46 connecting the axial opening 41 to the first section 29 of the valve housing and a second channel 47 connecting the axial opening 41 to the second section 30 of the valve housing are furthermore designed.

This third embodiment of the control valve according to the invention is functioning in principle in the same way as the first embodiment in figs. 1 - 3.

When the cross channel 44 of the positioning rod is pushed down past the cross wall 45 of the plunger, the second section 30 of the valve housing is communicating with the pressure chamber 34 via the second channel 47 of the plunger and the cross channel 44 and longitudinal central channel 42 of the positioning rod. Thereby, the pressure in the pressure chamber 34 will be smaller than the pressure in the first section 29 of the valve housing, the result of which is that the valve will open.

When the cross channel 44 of the positioning rod is lifted up over the cross wall 45 of the plunger, the first section 29 of the valve housing is communicating with the pressure chamber 34 via the cross channel 44 and longitudinal, central channel 42 of the positioning rod. Thereby, the pressure in the pressure chamber 34 will be greater than the pressure in the second section 30 of the valve housing, the result of which is that the valve will close.

When the cross channel 44 of the positioning rod is in the partition 45 of the plunger, all communication between the pressure chamber 34 and the two sections 29 and 30 of the valve housing has been disconnected. The position of the plunger is stationary in relation to the valve housing. The valve has been controlled.

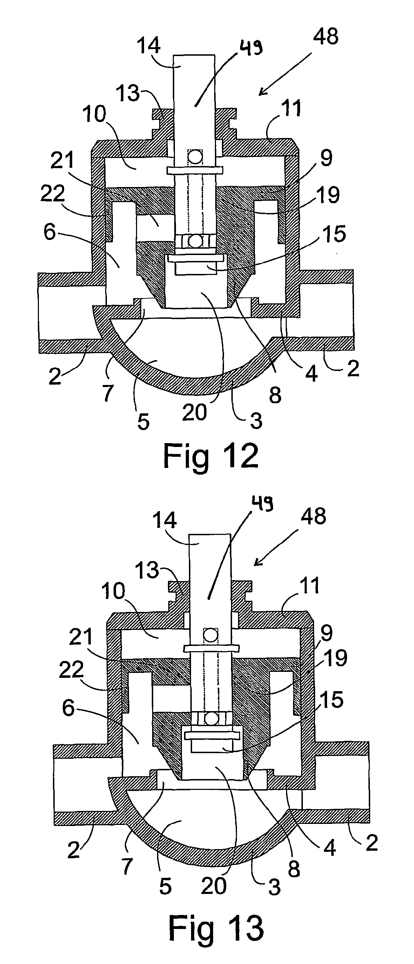

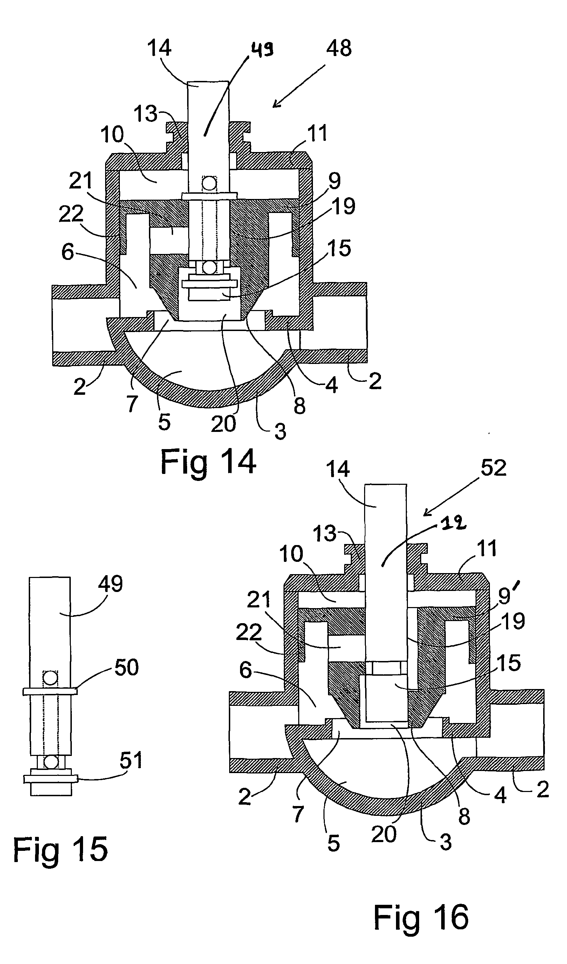

Figs. 12 - 15 show a variant 48 of the control valve in figs. 1 - 5. The only difference is that the positioning rod in fig. 4 now has been replaced by the positioning rod 49 of fig. 15, which is provided with a, seen in the figure, upper collar 50 and a lower collar 51. The rest of the parts of the valve are designated by the same reference numerals as in figs. 1 - 5.

At the normally dominant differential pressure above the valve 48, this valve is functioning in quite the same way as described above with reference to figs. 1 - 3. That is, the valve 48 in fig. 12 is in an opening phase, in fig. 13 in a stationary phase, and in fig. 14 in a closing phase.

In some cases, the differential pressure can however be so low that it is not able to overcome the natural frictional resistance between the movable parts of the valve. The control valve in figs. 1 - 3 can then no longer be controlled by displacement of the positioning rod 12 of fig. 4.

The variant 48 of the control valve 1 in figs. 12 - 15 can however be controlled even if the differential pressure is almost zero because the positioning rod 49 now is provided with the collars 50 and 51.

It is now assumed that there is not sufficient differential pressure to displace the plunger 9, and that the valve 48 still is wanted closed more or less by displacing the positioning rod 49 in relation to the valve housing 3 by means of an actuator or manually.

In this case, the desired closing manoeuvre now quite simply takes place by displacing the positioning rod 49 downwards, seen in the figure, in the valve housing 3 whereby its upper collar 50 first will encounter the upper side of the plunger 9 and then bring the plunger along during the continued downwards movement of the positioning rod 49.

An opening manoeuvre takes place in reverse order, it now being the lower collar 51 of the positioning rod 49 which is the active collar which in this case, will bring the plunger upwards when the positioning rod is pushed upwards in the valve housing 3.

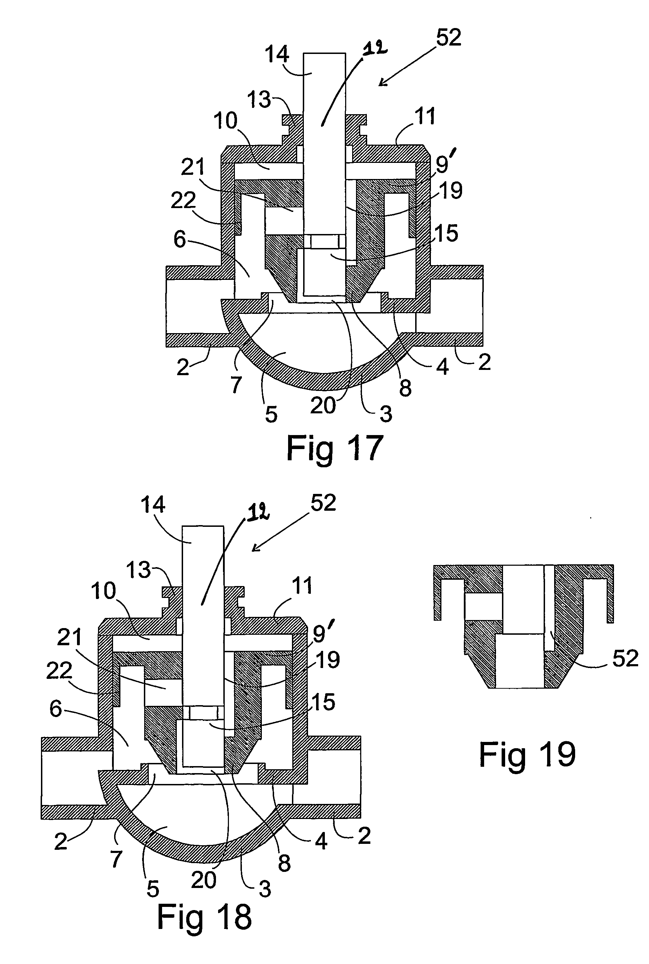

Figs. 16 - 19 show a fifth embodiment of a valve according to the invention. This embodiment corresponds essentially to the one in figs. 1 - 5, and like parts are therefore designated by the same reference numerals.

The difference is that the longitudinal, central channel 16 in the positioning rod 12 now has been replaced by a longitudinal connecting channel 52 designed in the plunger 9' and discharging partly into the pressure chamber 10, partly at a distance from this chamber.

The fifth embodiment of the valve according to the invention moreover functions in the same way as the first one, and its function will therefore not be described in detail here.

## Claims

1. A control valve (1; 23; 48; 52) for controlling a liquid flow in a pipeline (2; 26) and comprising
- a valve housing (3; 27) divided by a flow opening (7; 31) defining an axis into first and second sections (5, 6; 29; 30) connected to the pipe (2; 26) upstream and downstream respectively of the valve (1; 23; 48; 52),
- a pressure chamber (10; 34) designed preferably coaxially to the flow opening (7; 31) and communicating with the second section (6; 30) of the valve housing (3; 27), and
- a plunger (9; 33; 9') displaceably placed in the pressure chamber (10; 34) and having an end part (8; 32) for controlling the flow area of the valve (1; 23; 48; 52) in cooperation with said flow opening (7; 31),
**characterised in that** the valve (1; 23; 48; 52) furthermore comprises
- an axial opening (19; 41) designed in the plunger (9; 33; 9') and connected to at least one first channel (20; 46) discharging into or near the first section (5; 29) of the valve housing (3; 27), and at least one second channel (21; 47) discharging into the second section (6; 30) of the valve housing (3; 27),
- a positioning rod (12; 24; 37; 49) mounted displaceably or rotatably in the valve housing (3; 27) and having a first end part (15; 40) received in an axially displaceable manner in the axial opening (19; 41) of the plunger (9; 33; 9') and a second end part (14; 39) extending out of the valve housing (3; 27), and
- a connecting channel (16, 17, 18; 25; 42; 52) designed in the positioning rod (12; 24; 37; 49) or in the plunger (9') and communicating with the pressure chamber (10; 34) at one end, and furthermore communicating with the at least one first channel (20; 46) of the plunger (9; 33; 9') in a first position of the positioning rod (12; 24; 37; 49) in relation to the plunger (9; 33; 9′), with the at least one second channel (21; 47) of the plunger (9; 33; 9') in a second position, and with none of these first or second channels (20, 21; 46, 47) in a third position.

2. A control valve according to claim 1, wherein the positioning rod (12) is displaceably mounted in the valve housing (3), **characterised in that** the positioning rod (12) is extending into the axial opening (19) of the plunger (9) via the pressure chamber (10), and that its connection channel (16,17,18) consists of an axially extending channel (16), at least one first cross channel (17) discharging into the pressure chamber (10), and at least one second cross channel (18) discharging at a distance from the first cross channel (17).

3. A control valve according to claim 1, wherein the positioning rod (37) is displaceably mounted in the valve housing (27), **characterised in that** the positioning rod (37) is extending into the axial opening (41) of the plunger (33) via the first and second sections (29;30) of the valve housing (27), and that its connecting channel consists of an axially extending channel (42) discharging into an end of the positioning rod (37) facing the pressure chamber (34), and at least one cross channel (44) at a distance from this discharge point.

4. A control valve according to claim 1, wherein the positioning rod (24) is rotatably mounted in the valve housing (3), **characterised in that** the positioning rod (24) is extending into the axial opening (19) of the plunger (9) via the pressure chamber (10), and that its connecting channel (25) consists of a screw thread (25) extending along the outer side of the positioning rod (24) from an area in the pressure chamber (10) to an area at a distance from this chamber (10).

5. A control valve according to claim 4, **characterised in that** the at least one second channel (21) of the plunger (9) has a diameter equal to or smaller than the axial spacing between two consecutive 360° threads of the screw thread (25).

6. A control valve according to any of the claims 1 - 5, **characterised in that** the plunger (9; 33; 9') is arranged to be displaced in the pressure chamber (10; 34) between a first position in which its projecting end part (8; 32) for controlling the flow area of the valve (1; 23; 48; 52) is closing the flow opening (7; 31), and a second position in which this end part (8; 32) is at the greatest possible distance from the flow opening (7; 31).

7. A control valve according to any of the claims 1 - 6, **characterised in that** the projecting end part (8) of the plunger (9) is extending conically into or through the flow opening (7).

8. A control valve according to any of the claims 1 - 7, **characterised in that** the pressure chamber (10; 34) has a diameter which is larger than the flow opening (7; 31).

9. A control valve according to any of the claims 1 - 8, **characterised in that** the second end part (14; 39) of the positioning rod (12; 37) is operatively connected to an actuator.

10. A control valve according to any of the claims 1 - 9, **characterised in that** the positioning rod (49) is provided with collars (50;51) on either end of the axial opening (19) of the plunger (9), and that the spacing between these collars (50;51) is greater than the length of the axial opening (19).

## Patentansprüche

1. Regelventil (1; 23; 48; 52) zum Regeln einer Flüssigkeitsströmung in einer Rohrleitung (2; 26), das Folgendes umfasst:
ein Ventilgehäuse (3; 27), das durch eine eine Achse definierende Strömungsöffnung (7; 31) in einen ersten und einen zweiten Bereich (5, 6; 29, 30), die stromaufwärts vor bzw. stromabwärts hinter dem Ventil (1; 23; 48; 52) mit dem Rohr (2; 26) verbunden sind, unterteilt ist;
eine Druckkammer (10; 34), die vorzugsweise koaxial zur Strömungsöffnung (7; 31) vorgesehen ist und mit dem zweiten Bereich (6; 30) des Ventilgehäuses (3; 27) in Verbindung steht; und
einen Plunger (9; 33; 9'), der verschiebbar in der Druckkammer ((10; 34) platziert ist und ein Endteil (8; 32) zum Regeln der Strömungsfläche des Ventils (1; 23; 48; 52) im Zusammenwirken mit der Strömungsöffnung (7; 31) hat,
**dadurch gekennzeichnet, dass** das Ventil (1; 23; 48; 52) weiterhin eine im Plunger (9; 33; 9') vorgesehene axiale Öffnung (19; 41) umfasst, die mit mindestens einem ersten Kanal (20; 46), der in den ersten Bereich (5; 29) des Ventilgehäuses (3; 27) hinein oder in der Nähe davon austrägt, sowie mit mindestens einem zweiten Kanal (21; 47), der in den zweiten Bereich (6; 30) des Ventilgehäuses (3; 27) hinein austrägt, verbunden ist;
eine Positionierstange (12; 24; 37; 49) verschiebbar oder drehbar im Ventilgehäuse (3; 27) montiert ist und ein erstes Endteil (15; 40), das in einer axial verschiebbaren Weise von der axialen Öffnung (19; 41) des Plungers (9; 33; 9') aufgenommen wird, sowie ein zweites Endteil (14; 39), das aus dem Ventilgehäuse (3; 27) herausragt, hat, und
ein Verbindungskanal (16, 17, 18; 25; 42; 52) in der Positionierstange (12; 24; 37; 49) oder im Plunger (9') vorgesehen ist und mit der Druckkammer (10; 34) an einem Ende in Verbindung steht und weiterhin mit dem mindestens einen ersten Kanal (20; 46) des Plungers ((9; 33; 9') in einer ersten Position der Positionierstange (12; 24; 37; 49) im Verhältnis zum Plunger (9; 33; 9'), mit dem mindestens einen zweiten Kanal (21; 47) des Plungers (9; 33; 9') in einer zweiten Position sowie weder mit dem ersten noch mit dem zweiten Kanal (20, 21; 46, 47) in einer dritten Position in Verbindung steht.

2. Regelventil nach Anspruch 1, bei dem die Positionierstange (12) verschiebbar im Ventilgehäuse (3) montiert ist, **dadurch gekennzeichnet, dass** sich die Positionierstange (12) über die Druckkammer (10) in die axiale Öffnung (19) des Plungers (9) hineinerstreckt und dass ihr Verbindungskanal (16, 17, 18) aus einem axial verlaufenden Kanal (16), mindestens einem in die Druckkammer (10) austragenden ersten Querkanal (17) sowie mindestens einem in einer Distanz vom ersten Querkanal (17) austragenden zweiten Querkanal (18) besteht.

3. Regelventil nach Anspruch 1, bei dem die Positionierstange (37) verschiebbar im Ventilgehäuse (27) montiert ist, **dadurch gekennzeichnet, dass** sich die Positionierstange (37) über den ersten und den zweiten Bereich (29; 30) des Ventilgehäuses (27) in die axiale Öffnung (41) des Plungers (33) hineinerstreckt und dass ihr Verbindungskanal aus einem axial verlaufenden Kanal (42), der in ein der Druckkammer (34) zugewandtes Ende der Positionierstange (37) austrägt, sowie mindestens einem in einer Distanz von diesem Austragungspunkt vorgesehenen Querkanal (44) besteht.

4. Regelventil nach Anspruch 1, bei dem die Positionierstange (24) drehbar im Ventilgehäuse (3) montiert ist, **dadurch gekennzeichnet, dass** sich die Positionierstange (24) über die Druckkammer (10) in die axiale Öffnung (19) des Plungers (9) hineinerstreckt und dass ihr Verbindungskanal (25) aus einem Schraubgewinde (25) besteht, das entlang der äußeren Seite der Positionierstange (24) von einer Fläche in der Druckkammer (10) aus zu einer Fläche in einer Distanz von dieser Kammer (10) verläuft.

5. Regelventil nach Anspruch 4, **dadurch gekennzeichnet, dass** der mindestens eine zweite Kanal (21) des Plungers (9) einen Durchmesser hat, der dem axialen Abstand zwischen zwei aufeinanderfolgenden 360°-Gängen des Schraubgewindes (25) entspricht oder kleiner als dieser ist.

6. Regelventil nach einem der Ansprüche 1 bis 5, **dadurch gekennzeichnet, dass** der Plunger (9; 33; 9') so vorgesehen ist, dass er in der Druckkammer (10; 34) zwischen einer ersten Position, in der sein vorspringendes Endteil (8; 32) zum Regeln der Strömungsfläche des Ventils (1; 23; 48; 52) die Strömungsöffnung (7; 31) schließt, und einer zweiten Position, in der dieses Endteil (8; 32) die größtmögliche Distanz von der Strömungsöffnung (7; 31) aufweist, verschiebbar ist.

7. Regelventil nach einem der Ansprüche 1 bis 6, **dadurch gekennzeichnet, dass** sich das vorspringende Endteil (8) des Plungers (9) konisch in die Strömungsöffnung (7) hinein- oder durch diese hindurcherstreckt.

8. Regelventil nach einem der Ansprüche 1 bis 7, **dadurch gekennzeichnet, dass** die Druckkammer (10; 34) einen Durchmesser hat, der größer als die Strömungsöffnung (7; 31) ist.

9. Regelventil nach einem der Ansprüche 1 bis 8, **dadurch gekennzeichnet, dass** das zweite Endteil (14; 39) der Positionierstange (12; 37) betriebswirksam mit einem Betätiger verbunden ist.

10. Regelventil nach einem der Ansprüche 1 bis 9, **dadurch gekennzeichnet, dass** die Positionierstange (49) an beiden Enden der axialen Öffnung (19) des Plungers (9) mit Kragen (50; 51) vorgesehen ist und dass der Abstand zwischen diesen Kragen (50; 51) größer als die Länge der axialen Öffnung (19) ist.

## Revendications

1. Clapet de servocommande (1 ; 23 ; 48 ; 52) pour réguler l'écoulement d'un liquide dans une canalisation (2, 26) et comportant
- un logement de clapet (3 ; 27) divisé par une ouverture d'écoulement (7 ; 31) définissant un axe dans une première et deuxième sections (5, 6 ; 29, 30) reliées à la canalisation (2, 26) respectivement en amont et en aval du clapet (1 ; 23 ; 48 ; 52),
- une chambre de compression (10 ; 34) conçue de préférence dans le même axe que l'ouverture d'écoulement (7 ; 31) et communiquant avec la deuxième section (6; 30) du logement de clapet (3 ; 27), et
- un plongeur (9 ; 33 ; 9') placé d'une manière déplaçable dans la chambre de compression (10; 34) et muni d'une partie d'extrémité (8; 32) pour réguler la zone d'écoulement du clapet (1 ; 23 ; 48 ; 52) en coopération avec ladite ouverture d'écoulement (7 ; 31),
**caractérisé en ce que** le clapet (1 ; 23 ; 48 ; 52) comporte en outre
- une ouverture axiale (19 ; 41) conçue dans le plongeur (9 ; 33 ; 9') et reliée à au moins un premier canal (20 ; 46) se déversant dans la première section (5 ; 29) de logement de clapet (3 ; 27) ou à proximité de celle-ci, et au moins un deuxième canal (21 ; 47) se déversant dans la deuxième section (6 ; 30) du logement de clapet (3 ; 27),
- une tige de positionnement (12; 24 ; 37 ; 49) montée d'une manière déplaçable ou tournante dans le logement de clapet (3 ; 27) et munie d'une première partie d'extrémité (15; 40) reçue d'une manière déplaçable axialement dans l'ouverture axiale (19 ; 41) du plongeur (9 ; 33 ; 9') et d'une deuxième partie d'extrémité (14 ; 39) se prolongeant à l'extérieur du logement de clapet (3 ; 27), et
- un canal de liaison (16, 17, 18 ; 25 ; 42 ; 52) reçu dans la tige de positionnement (12 ; 24 ; 37 ; 49) ou dans le plongeur (9') et communiquant avec la chambre de compression (10 ; 34) à une extrémité, et communiquant en outre avec ledit, au moins un, premier canal (20 ; 46) du plongeur (9 ; 33 ; 9') dans une première position de la tige de positionnement (12 ; 24 ; 37 ; 49) par rapport au plongeur (9 ; 33 ; 9'), avec ledit, au moins un, deuxième canal (21 ; 47) du plongeur (9 ; 33 ; 9') dans une deuxième position, et muni de ces premier ou deuxième canaux (20, 21 ; 46, 47) dans une troisième position.

2. Clapet de servocommande selon la revendication 1, dans lequel la tige de positionnement (12) est montée d'une manière déplaçable dans le logement de clapet (3), **caractérisé en ce que** la tige de positionnement (12) se prolonge dans l'ouverture axiale (19) du plongeur (9) en passant par la chambre de compression (10), et que son canal de liaison (16, 17, 18) comprend un canal se prolongeant axialement (16), au moins un premier canal transversal (17) se déversant dans la chambre de compression (10) et au moins un deuxième canal transversal (18) se déversant à une distance du premier canal transversal (17).

3. Clapet de servocommande selon la revendication 1, dans lequel la tige de positionnement (37) est montée d'une manière déplaçable dans le logement de clapet (27), **caractérisé en ce que** la tige de positionnement (37) se prolonge dans l'ouverture axiale (41) du plongeur (33) en passant par les première et deuxième sections (29; 30) du logement de clapet (27), et que son canal de liaison comprend un canal se prolongeant axialement (42) se déversant dans une extrémité de la tige de positionnement (37) en face de la chambre de compression (34), et au moins un canal transversal (44) à une distance de ce point de déversement.

4. Clapet de servocommande selon la revendication 1, dans lequel la tige de positionnement (24) est montée tournante dans le logement de clapet (3), **caractérisé en ce que** la tige de positionnement (24) se prolonge dans l'ouverture axiale (19) du plongeur (9) en passant par la chambre de compression (10), et que son canal de liaison (25) comprend un filet de vis (25) se prolongeant le long d'un côté extérieur de la tige de positionnement (24) depuis une zone dans la chambre de compression (10) jusqu'à une zone à une distance de cette chambre (10).

5. Clapet de servocommande selon la revendication 4, **caractérisé en ce que** ledit, au moins un, deuxième canal (21) du plongeur (9) a un diamètre qui est égal ou inférieur à l'espacement axial entre deux filets consécutifs de 360° du filet de vis (25).

6. Clapet de servocommande selon l'une quelconque des revendications 1 à 5, **caractérisé en ce que** le plongeur (9 ; 33 ; 9') est disposé de façon être déplacé dans la chambre de compression (10 ; 34) entre une première position dans laquelle sa partie d'extrémité saillante (8 ; 32) pour réguler la zone d'écoulement du clapet (1 ; 23 ; 48 ; 52) ferme l'ouverture d'écoulement (7; 31), et une deuxième position dans laquelle cette partie d'extrémité (8 ; 32) se situe à la plus grande distance possible de l'ouverture d'écoulement (7 ; 31).

7. Clapet de servocommande selon l'une quelconque des revendications 1 à 6, **caractérisé en ce que** la partie d'extrémité saillante (8) du plongeur (9) se prolonge de manière conique dans l'ouverture d'écoulement (7) ou à travers celle-ci.

8. Clapet de servocommande selon l'une quelconque des revendications 1 à 7, **caractérisé en ce que** la chambre de compression (10 ; 34) a un diamètre qui est supérieur à celui de l'ouverture d'écoulement (7 ; 31).

9. Clapet de servocommande selon l'une quelconque des revendications 1 à 8, **caractérisé en ce que** la deuxième partie d'extrémité (14 ; 39) de la tige de positionnement (12 ; 37) est reliée d'une manière opérationnelle à un actionneur.

10. Clapet de servocommande selon l'une quelconque des revendications 1 à 9, **caractérisé en ce que** la tige de positionnement (49) est prévue avec des colliers (50 ; 51) à chaque extrémité de l'ouverture axiale (19) du plongeur (9), et que l'espacement entre ces colliers (50 ; 51) est supérieur à la longueur de l'ouverture axiale (19).
